# FASCICULE DE BREVET EUROPEEN

(11) **EP 3 335 601 B1**
(45) Date de publication et mention de la délivrance du brevet: **06.11.2019**
(21) Numéro de dépôt: 17205737.4
(22) Date de dépôt: 06.12.2017
(51) Int. Cl.: A47J 37/07, A47J 37/06

(54) **PLAQUE DE CUISSON COMPORTANT DES ZONES EN RELIEF INCLINÉES ET DES ZONES CREUSES INCLINÉES**
KOCHPLATTE, DIE GENEIGTE RELIEFBEREICHE UND GENEIGTE HOHLRAUMBEREICHE UMFASST
HOB HAVING SLOPING RAISED AREAS AND SLOPING HOLLOW AREAS

(30) Priorité: 13.12.2016 FR 1662392
(43) Date de publication de la demande: 20.06.2018
(73) Titulaire: SEB S.A., 69130 Ecully (FR)
(72) Inventeur: BOUVIER, Pierre, 38110 SAINT VICTOR DE CESSIEU (FR); BESSON, Jean-Christophe, 74600 SEYNOD (FR); GOUTHIERE, Christophe, 74150 RUMILLY (FR)
(74) Mandataire: Soares, Luis Filipe

(56) Documents cités:
- WO-A2-2004/093622
- DE-U1-202013 003 030
- US-A- 6 087 634
- US-A1- 2001 023 641
- US-A1- 2015 182 072

## Description

La présente invention se rapporte à un appareil de cuisson de type gril, autrement appelé gril de cuisson, comprenant au moins une plaque de cuisson recevant un aliment à cuire. Ce type d'appareil est utilisé pour un barbecue, une grillade d'aliment de différentes sortes telles que de la viande, des légumes, etc.

Plus particulièrement, la présente invention concerne une plaque de cuisson comprenant des zones en relief. Celles-ci ont pour but de surélever les aliments à cuire de manière à ménager des zones creuses sous les aliments pour l'évacuation des jus. Ces zones en relief ont également pour but de réaliser des marques de grillage sur l'aliment en cuisson. L'invention concerne également le gril de cuisson comportant une plaque de cuisson et un procédé de fabrication d'une telle plaque de cuisson.

Généralement, pour un gril de cuisson conventionnel, la plaque de cuisson et le sommet des zones en relief sont inscrits dans un plan parallèle à un support plan sur lequel est disposé ledit gril. La surface du support plan est par exemple la surface horizontale d'une table ou d'un plan de travail. Cependant, il est constaté que la plaque de cuisson conventionnelle présente un défaut d'évacuation du jus dégagé par l'aliment en cuisson, en particulier par les types de viande contenant beaucoup de matière grasse tel que du porc. Par conséquent, des jus stagnants sur la plaque de cuisson sont brûlés et dégagent de la fumée, ce qui n'est pas agréable pour des utilisateurs qui sont enfumés pendant et après l'utilisation du gril de cuisson. Par ailleurs, le reste du jus, qui n'est pas brûlé complètement, est transformé en des amas solides accrochés à la plaque de cuisson. Cela pose donc des difficultés de nettoyage de la plaque après utilisation.

Pour ces raisons, il est nécessaire d'évacuer le maximum de jus le plus rapidement possible avant qu'il soit brûlé ou caramélisé sur la plaque de cuisson. Ce besoin est d'autant plus important lorsque les aliments à cuire contiennent une quantité de graisse importante.

Pour ce faire, de nombreux grils de cuisson comportent désormais des plaques de cuisson inclinées par rapport au support plan de manière à diriger le jus vers le réceptacle de récupération de jus. Une telle plaque est décrite par exemple dans le document DE202013003030.

Cependant, l'évacuation du jus d'une telle plaque de cuisson n'est pas tout à fait satisfaisante. En effet, lorsque les jus dégagés par l'aliment en cuisson sont issus du point le plus élevé de la plaque de cuisson, alors le parcours d'évacuation du jus est plus long. Il y a donc un risque que vers la fin du parcours, les jus soient brûlés ou caramélisés et qu'ils se figent sur la plaque de cuisson. Les mêmes problèmes du gril conventionnel se posent donc pour le gril avec plaque de cuisson inclinée.

Il est également connu du document US6087634 une plaque de cuisson pour gril de cuisson comprenant des zones en relief s'étendant selon une direction sensiblement rectiligne et destinées à recevoir des aliments à cuire et aux bords desquelles sont disposées des zones creuses destinées à recueillir et à évacuer les jus des aliments vers au moins un orifice d'évacuation.

De plus, les zones en relief présentent une première inclinaison, et les zones creuses présentent une deuxième inclinaison, la deuxième inclinaison étant plus importante que la première inclinaison.

Cependant, une telle plaque n'est pas satisfaisante pour réduire les dégagements de fumée et la formation d'amas caramélisés sur la plaque.

L'objet de la présente invention est de proposer une plaque de cuisson qui permet d'évacuer de manière optimale des jus dégagés par l'aliment en cuisson afin de minimiser les dégagements de fumées et de faciliter le nettoyage de ladite plaque après l'utilisation, notamment en réduisant la formation d'amas caramélisés sur la plaque.

A cet effet, l'invention propose une plaque de cuisson pour gril de cuisson comprenant des zones en relief s'étendant selon une direction sensiblement rectiligne et destinées à recevoir les aliments à cuire et aux bords desquelles sont disposées des zones creuses destinées à recueillir et à évacuer les jus des aliments vers au moins un orifice d'évacuation, les zones en relief présentant une première inclinaison en direction de l'au moins un orifice d'évacuation, et les zones creuses présentant une deuxième inclinaison en direction de l'au moins un orifice d'évacuation, la deuxième inclinaison étant plus importante que la première inclinaison.

Selon l'invention, les zones en relief et les zones creuses présentent une inclinaison croissante en direction de l'au moins un orifice d'évacuation.

Ainsi, la plaque de cuisson comprend une première inclinaison variable des zones en relief pour définir un support pour les aliments à cuire et une deuxième inclinaison variable des zones creuses pour définir un sens de circulation des jus. Ces deux inclinaisons sont croissantes selon la direction de l'au moins un orifice d'évacuation et la deuxième inclinaison est plus importante que la première inclinaison de manière à optimiser la vitesse d'évacuation des jus le long des zones creuses tout en diminuant la durée de contact des jus avec les zones en relief. En conséquence, le dégagement de la fumée et la formation des amas caramélisés sont réduits.

Selon un mode de réalisation de l'invention, la première inclinaison croissante des zones en relief est formée par une première pente distale de l'au moins un orifice d'évacuation et une deuxième pente, proximale de l'au moins un orifice d'évacuation, la deuxième pente étant supérieure à la première pente. Ainsi, la différence de valeur entre la première pente et la deuxième pente change la vitesse d'écoulement du jus. De cette manière, en ayant la deuxième pente plus élevée que la première pente, l'écoulement du jus au niveau des zones en relief est accéléré lorsque les jus s'approchent de l'orifice d'évacuation. En conséquence, la durée de contact entre les jus et les zones en relief est réduite, surtout vers la fin du parcours d'écoulement des jus.

Selon le paragraphe précédent, la première pente de la première inclinaison d'une zone en relief s'étend sur au moins la moitié de la longueur de ladite zone en relief.

Selon un mode réalisation de l'invention, la deuxième inclinaison des zones creuses est formée par une première pente distale de l'au moins un orifice d'évacuation et une deuxième pente proximale de l'au moins un orifice d'évacuation, la deuxième pente étant supérieure à première pente. Ainsi, les zones creuses permettent d'évacuer plus rapidement des jus, en particulier lorsque les jus s'approchent de l'orifice d'évacuation.

Selon le paragraphe précédent, la première pente de la deuxième inclinaison d'une zone creuse s'étend sur au moins la moitié de la longueur de ladite zone creuse.

Selon un mode de réalisation, la deuxième pente de la deuxième inclinaison est supérieure d'un degré à la première pente de ladite deuxième inclinaison. La différence d'un degré entre les deux pentes des zones creuses permet une évacuation optimale du jus vers l'orifice d'évacuation.

Selon un mode de réalisation, la hauteur des zones en relief, définie par rapport à une surface de référence de la plaque de cuisson, augmente au fur et à mesure que les zones en relief s'approchent de l'au moins un orifice d'évacuation. La hauteur des zones en relief est nécessaire pour empêcher que l'aliment prenne appui sur la surface de la plaque de cuisson, c'est-à-dire la surface des zones creuses. Ainsi, un passage est formé en-dessous de l'aliment dans les zones creuses, ce qui permet à celles-ci de recueillir les jus et de les évacuer vers l'orifice d'évacuation.

Selon un exemple de l'invention, les zones en relief sont parallèles entre elles et espacées de manière régulière d'une distance déterminée. La distance entre les zones en relief a une influence sur la durée de contact des jus avec la plaque de cuisson.

Afin d'avoir une durée de contact optimale des jus avec la plaque de cuisson, le rapport entre la distance déterminée entre les zones en relief et la largeur de chaque zone en relief peut être compris entre 1 et 1,5.

Selon un mode de réalisation de l'invention, l'au moins un orifice d'évacuation est réalisé dans une rigole disposée en amont des zones en relief et des zones creuses selon le sens d'écoulement des jus. Dans ce mode de réalisation, la rigole peut présenter une inclinaison en direction de l'au moins un orifice d'évacuation. Ainsi, à tout point d'arrivée des jus dans la rigole, les jus sont amenés rapidement vers l'orifice d'évacuation.

Selon un exemple de l'invention, l'au moins un orifice d'évacuation est disposé sur une partie périphérique de la plaque de cuisson.

L'invention concerne également un gril de cuisson comprenant une plaque de cuisson comportant au moins une des caractéristiques présentées précédemment.

Selon le paragraphe précédent, le gril de cuisson comprend au moins un plot de surélévation au niveau du côté opposé à l'au moins un orifice d'évacuation, la plaque de cuisson étant posée sur le plot de surélévation. Ce dernier est réglé de manière à ce que la plaque de cuisson atteigne les inclinaisons souhaitées.

Selon un mode de réalisation de l'invention, la première inclinaison des zones en relief est formée par une première pente d'un premier angle et une deuxième pente d'un deuxième angle par rapport à un support plan sur lequel peut être disposé le gril de cuisson, et le deuxième angle étant supérieur au premier angle.

En alternative ou en combinaison avec la caractéristique précédente, la deuxième inclinaison des zones creuses est formée par une première pente d'un troisième angle et une deuxième pente d'un quatrième angle par rapport au support plan, et le quatrième angle étant supérieur au troisième angle.

L'invention concerne en outre un procédé de fabrication d'une plaque de cuisson comportant au moins une des caractéristiques présentées précédemment, selon lequel les zones en relief et les zones creuses sont fabriquées par emboutissage d'une plaque s'étendant selon une surface de référence déterminée.

Cette technique permet de générer facilement les différentes inclinaisons des zones en relief et des zones creuses à partir d'une simple plaque.

D'autres avantages pourront encore apparaître à l'homme du métier à la lecture des exemples ci-dessous, illustrés par les figures annexées, donnés à titre d'exemple:
- La figure 1 représente une vue en perspective d'un gril de cuisson comportant une plaque de cuisson selon l'invention,
- La figure 2 représente une vue de dessus de la plaque de cuisson de la figure 1 comportant deux orifices d'évacuation,
- La figure 3 représente une vue de dessus de la zone référencée « III » sur la figure 2 ;
- La figure 4 représente une vue en coupe selon la ligne A-A de la figure 3 sans la partie inférieure du gril;
- La figure 5 représente une vue en coupe selon la ligne B-B de la figure 2 sans la partie inférieure du gril;
- La figure 6 représente une vue en coupe selon la ligne C-C de la figure 2 sans la partie inférieure du gril;
- Les figures 7 et 8 représentent respectivement une vue agrandie de la zone référencée « VII » et une vue agrandie de la zone référencée « VIII » sur la figure 6 ;
- La figure 9 représente une vue de dessus du gril de cuisson de la figure 1 sans la plaque de cuisson ;
- Les figures 10 et 11 représentent une vue en coupe partielle selon la ligne D-D de la figure 2, respectivement du côté des orifices d'évacuation et du côté opposé auxdits orifices d'évacuation ;
- La figure 12 représente la même vue que la figure 6 avec la partie inférieure du gril de cuisson.

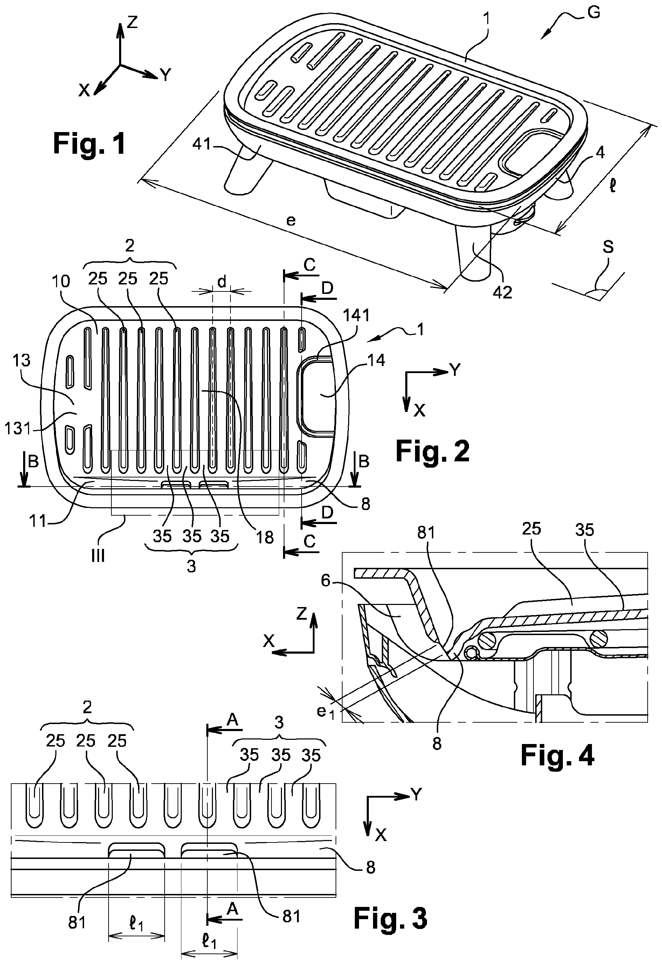

En référence à la figure 1, un gril de cuisson G comprend une plaque de cuisson 1 supportée par un socle 4. La plaque de cuisson 1 présente une longueur l s'étendant suivant un premier axe horizontal X et une largeur e s'étendant suivant un deuxième axe horizontal Y, perpendiculaire au premier axe X. Par ailleurs, un troisième axe vertical Z, perpendiculaire aux deux autres axes, pointe du bas vers le haut de la figure 1. La hauteur H du gril de cuisson s'étend selon ce troisième axe vertical Z. Dans le présent document, les termes « dessus », « dessous », « inférieur », « supérieur » sont définis par rapport au troisième axe vertical Z. Le terme « longueur » est défini par rapport au premier axe horizontal X et le terme « largeur » est défini par rapport au deuxième axe horizontal Y.

Le socle 4 est constitué d'un corps 41 dont la section transversale a une forme incurvée et des pieds 42 prenant appui sur un support plan S. Par exemple, le support plan S a une surface plane et horizontale comme celle d'une table ou d'un plan de travail.

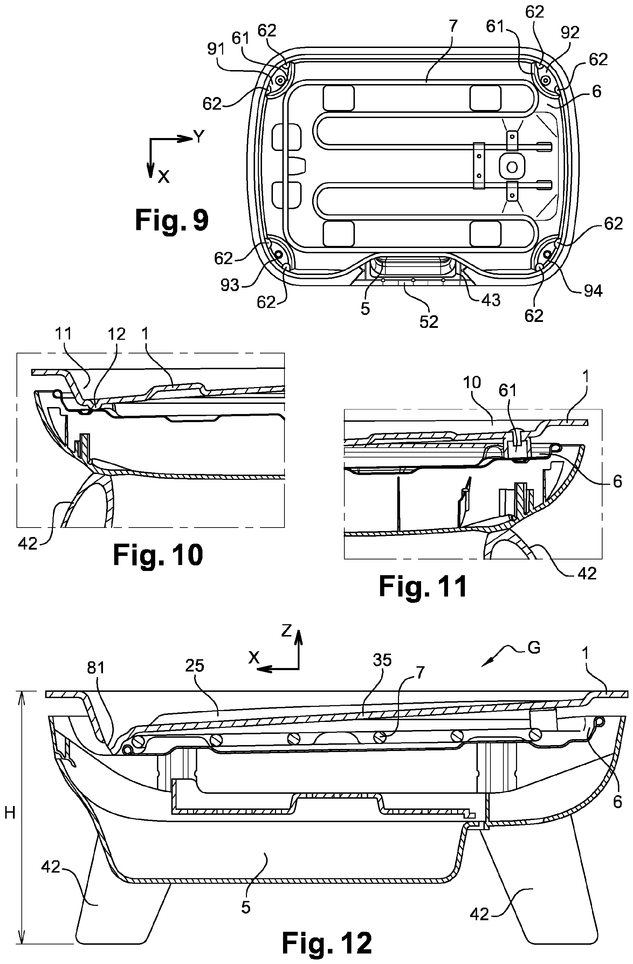

Le corps 41 de socle comprend une résistance électrique 7 et un réflecteur 6, visibles à la figure 9. La résistance électrique 7 est placée entre la plaque de cuisson 1 et le réflecteur 6. Le corps 41 de socle comprend en outre un logement 43 qui reçoit un réceptacle 5 de récupération de jus, représenté à la figure 12. Le réceptacle 5 est ainsi amovible, ce qui facilite son nettoyage après l'utilisation du gril.

Le logement 43 est situé en-dessous du réflecteur 6. Ce dernier couvre partiellement le logement 43, ce qui permet de laisser un accès 52 direct au réceptacle 5 une fois que celui-ci est installé sur le gril de cuisson. Ici, le logement 43 est situé un peu près à mi-largeur de la plaque de cuisson 1. Il peut être disposé à un autre endroit dans un autre mode de réalisation de l'invention.

Comme illustré à la figure 1 et à la figure 2, la plaque de cuisson 1 porte des zones en relief 2 qui sont rectilignes et parallèles entre elles. Dans l'exemple illustré, les zones en relief 2 s'étendent selon le premier axe horizontal X. Ces zones sont espacées l'une de l'autre d'une distance d qui mesure, par exemple, 26 mm.

Par ailleurs, des zones creuses 3 sont réalisées aux bords des zones en relief 2. Dans l'exemple illustré, une zone creuse 35 est disposée de part et d'autre d'une zone en relief 25. En d'autres termes, une zone creuse 35 est située entre deux zones en relief 25 adjacentes.

La plaque de cuisson 1 comprend deux zones à usage spécifique : une première zone 13 située sur le côté gauche de la plaque de cuisson et une deuxième zone 14 située sur le côté droit de la plaque de cuisson. Ici, les termes « droit », « gauche » sont définis par rapport au deuxième axe horizontal Y et ils correspondent respectivement à la droite et à la gauche de la figure 2.

La première zone 13 comprend un motif 131 comportant une composition pigmentaire thermochrome pour indiquer le changement de température de la plaque de cuisson (par exemple celui commercialisé sous la dénomination commerciale «THERMOSPOT®»). La deuxième zone 14, délimitée par un arc saillant 141, comporte une surface lisse. Cette deuxième zone 14 est apte à recevoir un type d'aliment autre que celui disposé sur une surface de référence 18 de la plaque de cuisson 1. Par exemple, on peut mettre des gousses d'ail dans la deuxième zone 14 pour les faire cuire en même temps que la viande.

En référence aux figures 2 à 5, une rigole 8 est formée sur une partie périphérique 11 ou côté de la plaque de cuisson 1 perpendiculairement aux zones en relief 2. La rigole 8 est parallèle au deuxième axe horizontal Y. Deux orifices d'évacuation 81 sont réalisés dans la rigole au-dessus de l'accès 52 au réceptacle 5 de récupération de jus. Ainsi, une fois que le jus arrive au niveau des deux orifices 81, il tombe directement dans le réceptacle 5.

Dans l'exemple présenté, les deux orifices d'évacuation 81 sont de mêmes dimensions. Chacun de ces orifices présente une longueur l₁ mesurant, par exemple, 40 mm et une largeur e₁ mesurant, par exemple, 4 mm.

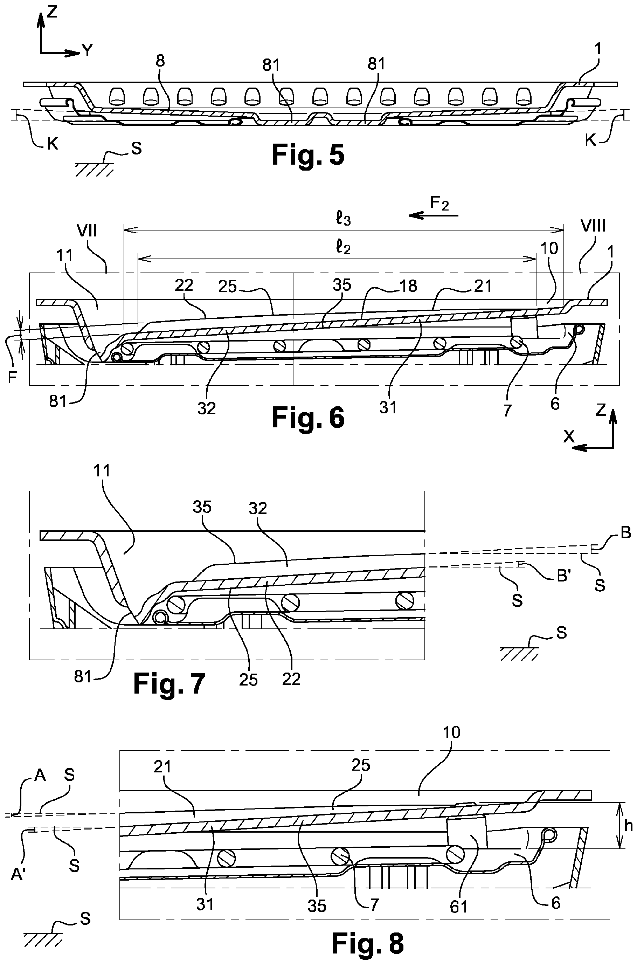

Comme illustré à la figure 5, la rigole 8 est inclinée de part et d'autre des orifices d'évacuation 81 afin de faire couler les jus rapidement dans lesdits orifices 81. Par exemple, l'angle d'inclinaison K de la rigole défini par rapport au support plan est de 3°.

Par ailleurs, afin de permettre un centrage de la plaque de cuisson 1 et d'empêcher les mouvements de ladite plaque dans le plan horizontal, il est prévu des bossages 62 disposés sur le réflecteur 6, comme représenté à la figure 9. Dans l'exemple présenté, les bossages 62 sont situés dans les quatre coins: en bas à gauche 93 et à droite 94, en haut à gauche 91 et à droite 92 de la figure 9. Ces bossages sont obtenus par emboutissage.

A la figure 10, du côté 11 des orifices d'évacuation 81, la plaque de cuisson 1 repose sur le réflecteur 6 par l'intermédiaire de poinçons 12.

Les figures 6 à 8 représentent une zone en relief 25 et une zone creuse 35 parmi les zones en relief 2 et les zones creuses 3 représentées dans cet exemple. La description de cette zone en relief 25 s'applique de la même manière pour toutes les zones en relief 2. Pareillement, la description de la zone creuse 35 s'applique de la même manière pour toutes les zones creuses 3.

La zone en relief 25 présente une première inclinaison de manière croissante en direction des orifices d'évacuation 81. Dans cet exemple, la zone en relief 25 s'étend selon le premier axe horizontal X.

L'inclinaison de la zone en relief 25 est formée de deux pentes : une première pente 21 et une deuxième pente 22. La première pente 21 de la zone en relief 25 est éloignée des orifices d'évacuation 81. Un premier angle A est défini entre la première pente 21 et le support plan S. De façon similaire, la deuxième pente 22 de la zone en relief 25, proche des orifices d'évacuation 81, définit avec le support plan S un deuxième angle B.

La deuxième pente 22 est plus élevée que la première pente 21, ce qui revient à dire que dans cet exemple, le deuxième angle B est supérieur au premier angle A. Par exemple, le premier angle A mesure 1,2° et le deuxième angle B mesure 3,7°.

De préférence, le premier angle A est compris entre 1° et 1,2° et le deuxième angle B est compris entre 3° et 3,7°.

Par ailleurs, la première pente 21 de la zone en relief 25 s'étend sur au moins la moitié, par exemple sur les deux tiers, de la longueur l₂ de ladite zone en relief 25 tandis que la deuxième pente 22 s'étend sur la partie restante en direction des orifices d'évacuation 81.

Il est également remarqué que la hauteur F de la zone en relief 25, définie par rapport à la surface de référence 18 de la plaque de cuisson 1, varie au fur et à mesure qu'elle s'approche des orifices d'évacuation 81. La hauteur F doit avoir une valeur suffisante pour que l'aliment ne vienne pas en appui sur la surface de référence 18 de la plaque de cuisson 1. Dans cet exemple, la hauteur F de chaque zone en relief 25 varie de 0,5 mm du côté 10 opposé aux orifices d'évacuation à 5 mm du côté 11 des orifices d'évacuation.

Les zones en relief 25 sont obtenues par emboutissage d'une plaque s'étendant selon la surface de référence 18 avant emboutissage

De la même manière que la zone en relief 25, la zone creuse 35 présente une inclinaison croissante en direction des orifices d'évacuation 81. De cette manière, l'inclinaison de la zone creuse 35 permet de guider les jus dégagés par l'aliment en cuisson vers les orifices d'évacuation 81 selon un sens d'écoulement du jus F₂. Dans cet exemple, le sens d'écoulement du jus F₂ est parallèle au premier axe horizontal X.

L'inclinaison de la zone creuse 35 est formée par deux pentes différentes. Une première pente 31 de la zone creuse 35 s'étend du côté 10 opposé aux orifices d'évacuation sur au moins la moitié, par exemple sur deux tiers, de la longueur l₃ de cette zone creuse 35. Elle définit avec le support plan S un troisième angle A' qui mesure par exemple 2,7°.

Une deuxième pente 32 de la zone creuse 35, successive à la première pente 31, s'étend sur le tiers restant de la longueur l₃ de ladite zone creuse 35. Un quatrième angle B' est définit entre la deuxième pente 32 de la zone creuse 35 et le support plan S. Le quatrième angle B' mesure par exemple 3,7°. La différence d'un degré entre le troisième angle A' et le quatrième angle B' permet un écoulement optimum des jus vers les orifices d'évacuation 81.

De préférence, le troisième angle A' est compris entre 1,2° et 2,7° et le quatrième angle B' est compris entre 3° et 3,7°.

Bien entendu, l'angle d'inclinaison des pentes, aussi bien pour les zones en reliefs 2 que pour les zones creuses 3, peuvent avoir d'autres valeurs. De préférence, l'angle d'inclinaison de la pente la plus éloignée des orifices d'évacuation est inférieur à celui de la pente la plus proche desdits orifices.

Afin de permettre à la plaque de cuisson 1 d'avoir les inclinaisons présentées ci-dessus, ladite plaque 1 est soulevée du côté 10 opposé aux orifices d'évacuation en prenant appui sur des plots de surélévation 61 dont un est représenté sur la figure 11. Ces plots de surélévation 61 sont installés, par exemple, respectivement dans les coins en haut à gauche 91 et en haut à droite 92 de la figure 9. Ces plots de surélévation 61 présentent une hauteur h, définie par rapport au réflecteur 6, mesurant par exemple 12 mm.

Dans un autre exemple de réalisation, la hauteur des plots de surélévations peut être réglable, c'est-à-dire qu'elle peut être modifiée en fonction de l'inclinaison souhaitée pour la plaque de cuisson.

En résumé, la zone en relief 25 présente une première inclinaison croissante, c'est-à-dire vers le bas, en direction des orifices d'évacuation 81. La première inclinaison est constituée de la première pente 21 d'angle A et de la deuxième pente 22 d'angle B. L'angle B est supérieur à l'angle A.

De façon similaire à la zone en relief 25, la zone creuse 35 présente une deuxième inclinaison croissante, c'est-à-dire vers le bas, en direction des orifices d'évacuation 81. La deuxième inclinaison est constituée de la première pente 31 d'angle A' et de la deuxième pente 32 d'angle B'. L'angle B' est supérieur à l'angle A'.

Ainsi, dans l'exemple illustré, la première inclinaison des zones en relief 2, 25 et la deuxième inclinaison des zones creuses 3, 35 sont formées chacune par deux pentes qui se succèdent suivant le premier axe horizontal X. Bien entendu, le nombre de pentes de chaque inclinaison peut être différent, par exemple supérieur à deux, dans d'autres modes de réalisation de l'invention.

Dans un autre mode de réalisation de l'invention, la première inclinaison des zones en relief et la deuxième inclinaison des zones creuses varient de manière davantage continue et progressive, vers le bas, en direction des orifices d'évacuation. Dans ce cas de figure, les première et deuxième inclinaisons sont constituées d'une pluralité finie ou infinie de pentes successives et dirigées vers les orifices d'évacuation. Les pentes sont de plus en plus importantes au fur et à mesure qu'elles sont proches des orifices d'évacuation.

## Revendications

1. Plaque de cuisson (1) pour gril de cuisson (G) comprenant des zones en relief (2, 25) s'étendant selon une direction sensiblement rectiligne et destinées à recevoir des aliments à cuire et aux bords desquelles sont disposées des zones creuses (3, 35) destinées à recueillir et à évacuer les jus des aliments vers au moins un orifice d'évacuation (81), les zones en relief (2, 25) présentant une première inclinaison en direction de l'au moins un orifice d'évacuation (81), et les zones creuses (3, 35) présentant une deuxième inclinaison en direction de l'au moins un orifice d'évacuation (81), la deuxième inclinaison étant plus importante que la première inclinaison, ladite plaque (1) étant **caractérisée en ce que** les zones en relief (2, 25) et les zones creuses présentent une inclinaison croissante en direction de l'au moins un orifice d'évacuation (81).

2. Plaque de cuisson (1) selon la revendication 1 **caractérisée en ce que** la première inclinaison croissante des zones en relief (2, 25) est formée par une première pente (21) distale de l'au moins un orifice d'évacuation et une deuxième pente (22) proximale de l'au moins un orifice d'évacuation, la deuxième pente étant supérieure à la première pente (21).

3. Plaque de cuisson (1) selon la revendication 2, **caractérisée en ce que** la première pente (21) de la première inclinaison d'une zone en relief (25) s'étend sur au moins la moitié de la longueur de ladite zone en relief (25).

4. Plaque de cuisson (1) selon l'une des revendications 1 à 3 **caractérisée en ce que** la deuxième inclinaison des zones creuses (3, 35) est formée par une première pente (31) distale de l'au moins un orifice d'évacuation et une deuxième pente (32) proximale de l'au moins un orifice d'évacuation, la deuxième pente étant supérieure à la première pente.

5. Plaque de cuisson (1) selon la revendication 4, **caractérisée en ce que** la première pente (31) de la deuxième inclinaison d'une zone creuse (35) s'étend sur au moins la moitié de la longueur de ladite zone creuse (35).

6. Plaque de cuisson (1) selon l'une des revendications précédentes **caractérisée en ce que** la hauteur (F) des zones en relief (2, 25), définie par rapport à une surface de référence (18) de la plaque de cuisson (1), augmente au fur et à mesure que les zones en relief (2, 25) s'approchent de l'au moins un orifice d'évacuation (81).

7. Plaque de cuisson (1) selon l'une des revendications précédentes **caractérisée en ce que** les zones en relief (2, 25) sont parallèles entre elles et espacées de manière régulière d'une distance (d) déterminée.

8. Plaque de cuisson (1) selon la revendication 8 **caractérisée en ce que** le rapport entre la distance (d) déterminée entre les zones en relief (2, 25) et la largeur de chaque zone en relief (25) est compris entre 1 et 1,5.

9. Plaque de cuisson (1) selon l'une des revendications précédentes **caractérisée en ce que** l'au moins un orifice d'évacuation (81) est réalisé dans une rigole (8) disposée en amont des zones en relief et des zones creuses selon le sens d'écoulement des jus.

10. Plaque de cuisson (1) selon la revendication précédente **caractérisée en ce que** la rigole (8) présente une inclinaison (K) en direction de l'au moins un orifice d'évacuation (81).

11. Gril de cuisson (G) **caractérisé en ce qu'**il comprend une plaque de cuisson (1) selon l'une des revendications précédentes.

12. Gril de cuisson (G) selon la revendication 11 **caractérisé en ce qu'**il comprend au moins un plot de surélévation (61) au niveau du côté (10) opposé à l'au moins un orifice d'évacuation (81), la plaque de cuisson (1) étant posée sur ledit plot de surélévation (61).

13. Gril de cuisson (G) selon la revendication 11 ou la revendication 12, apte à être disposé sur un support plan (S), **caractérisé en ce que** la première inclinaison des zones en relief (2, 25) est formée par une première pente (21) d'un premier angle (A) et une deuxième pente (22) d'un deuxième angle (B) par rapport au support plan (S), et le deuxième angle (B) étant supérieur au premier angle (A).

14. Grill de cuisson (G) selon l'une des revendications 11 à 13, apte à être disposé sur un support plan (S), **caractérisé en ce que** la deuxième inclinaison des zones creuses (3, 35) est formée par une première pente (31) d'un troisième angle (A') et une deuxième pente (32) d'un quatrième angle (B') par rapport au support plan (S), et le quatrième angle (B') étant supérieur au troisième angle (A').

15. Procédé de fabrication d'une plaque de cuisson selon l'une des revendications 1 à 10, selon lequel les zones en relief (2, 25) et les zones creuses (3, 35) sont fabriquées par emboutissage d'une plaque s'étendant selon une surface de référence (18) déterminée.

## Patentansprüche

1. Kochplatte (1) für einen Kochgrill (G), umfassend erhabene Bereiche (2, 25), die sich in einer im wesentlichen geradlinigen Richtung erstrecken und dazu bestimmt sind, um zu kochende Nahrungsmittel aufzunehmen, und an deren Rändern hohle Bereiche (3, 35) angeordnet sind, die dazu bestimmt sind, Lebensmittelsäfte zu sammeln und zu mindestens einer Auslassöffnung (81) auszulassen, wobei die erhabenen Bereiche (2, 25) eine erste Abschrägung zu der mindestens einen Auslassöffnung (81) aufweisen, und wobei die hohlen Bereiche (3, 35) eine zweite Abschrägung zu der mindestens einen Auslassöffnung (81) aufweisen, wobei die zweite Abschrägung größer als die erste Abschrägung ist, wobei die Platte (1) **dadurch gekennzeichnet ist, dass** die erhabenen Bereiche (2, 25) und die hohlen Bereiche eine zunehmende Abschrägung zu der mindestens einen Auslassöffnung (81) aufweisen.

2. Kochplatte (1) nach Anspruch 1, **dadurch gekennzeichnet, dass** die erste zunehmende Abschrägung der erhabenen Bereiche (2, 25) durch eine erste, von der mindestens einen Auslassöffnung distale Neigung (21) und eine zweite, von der mindestens einen Auslassöffnung proximale Neigung (22) gebildet ist, wobei die zweite Neigung größer als die erste Neigung (21) ist.

3. Kochplatte (1) nach Anspruch 2, **dadurch gekennzeichnet, dass** sich die erste Neigung (21) der ersten Abschrägung eines erhöhten Bereichs (25) über mindestens die Hälfte der Länge des erhöhten Bereichs (25) erstreckt.

4. Kochplatte (1) nach einem der Ansprüche 1 bis 3, **dadurch gekennzeichnet, dass** die zweite Abschrägung der hohlen Bereiche (3, 35) durch eine erste, von der mindestens einen Auslassöffnung distale Neigung (31) und eine zweite, von der mindestens einen Auslassöffnung proximale Neigung (32) gebildet ist, wobei die zweite Neigung größer als die erste Neigung ist.

5. Kochplatte (1) nach Anspruch 4, **dadurch gekennzeichnet, dass** sich die erste Neigung (31) der zweiten Abschrägung eines hohlen Bereichs (35) über mindestens die Hälfte der Länge des hohlen Bereichs (35) erstreckt.

6. Kochplatte (1) nach einem der vorhergehenden Ansprüche, **dadurch gekennzeichnet, dass** die Höhe (F) der erhabenen Bereiche (2, 25), die in Bezug auf eine Bezugsfläche (18) der Kochplatte (1) definiert ist, zunimmt, wenn sich die erhabenen Bereiche (2, 25) der mindestens einen Auslassöffnung (81) nähern.

7. Kochplatte (1) nach einem der vorhergehenden Ansprüche, **dadurch gekennzeichnet, dass** die erhabenen Bereiche (2, 25) parallel zueinander und regelmäßig in einem bestimmten Abstand (d) beabstandet sind.

8. Kochplatte (1) nach Anspruch 8, **dadurch gekennzeichnet, dass** das Verhältnis zwischen dem zwischen den erhabenen Bereichen (2, 25) ermittelten Abstand (d) und der Breite jedes erhabenen Bereichs (25) zwischen 1 und 1,5 liegt.

9. Kochplatte (1) nach einem der vorhergehenden Ansprüche, **dadurch gekennzeichnet, dass** die mindestens eine Auslassöffnung (81) in einer Rinne (8) ausgebildet ist, die stromaufwärts der erhabenen Bereiche und der hohlen Bereiche entlang der Fließrichtung der Säfte angeordnet ist.

10. Kochplatte (1) nach dem vorhergehenden Anspruch, **dadurch gekennzeichnet, dass** die Rinne (8) eine Abschrägung (K) zu der mindestens einen Auslassöffnung (81) aufweist.

11. Kochgrill (G), **dadurch gekennzeichnet, dass** er eine Kochplatte (1) nach einem der vorhergehenden Ansprüche umfasst.

12. Kochgrill (G) nach Anspruch 11, **dadurch gekennzeichnet, dass** er an der der mindestens einen Auslassöffnung (81) gegenüberliegenden Seite (10) der Platte mindestens eine Anhebungsklotz (61) aufweist, wobei die Kochplatte (1) auf den Anhebungsklotz (61) aufgesetzt ist.

13. Kochgrill (G) nach Anspruch 11 oder Anspruch 12, der auf einer ebenen Auflage (S) angeordnet werden kann, **dadurch gekennzeichnet, dass** die erste Abschrägung der erhabenen Bereiche (2, 25) durch eine erste Neigung (21) mit einem ersten Winkel (A) und einer zweiten Neigung (22) mit einem zweiten Winkel (B) mit Bezug auf die ebene Auflage (S) gebildet ist, und wobei der zweite Winkel (B) größer als der erste Winkel (A) ist.

14. Kochgrill (G) nach einem der Ansprüche 11 bis 13, der auf einer ebenen Auflage (S) angeordnet werden kann, **dadurch gekennzeichnet, dass** die zweite Abschrägung der hohlen Bereiche (3, 35) durch eine erste Neigung (31) mit einem dritten Winkel (A') und eine zweite Neigung (32) mit einem vierten Winkel (B') mit Bezug auf die ebene Auflage (S) gebildet ist, und wobei der vierte Winkel (B') größer als der dritte Winkel (A') ist.

15. Verfahren zur Herstellung einer Kochplatte nach einem der Ansprüche 1 bis 10, wobei die erhabenen Bereiche (2, 25) und die hohlen Bereiche (3, 35) durch Stanzen einer Platte hergestellt werden, die sich entlang einer bestimmten Bezugsoberfläche (18) erstreckt.

## Claims

1. Cooking plate (1) for a cooking grill (G) comprising zones in relief (2, 25) extending in a substantially straight direction and intended to receive food to be cooked and at the edges of which are arranged recessed zones (3, 35) intended to collect and to discharge the juices of foods to at least one discharge orifice (81), with the zones in relief (2, 25) having a first inclination in the direction of the at least one discharge orifice (81), and the recessed zones (3, 35) having a second inclination in the direction of the at least one discharge orifice (81), with the second inclination being more substantial than the first inclination, said plate (1) being **characterised in that** the zones in relief (2, 25) and the recessed zones have an increasing inclination in the direction of the at least one discharge orifice (81).

2. Cooking plate (1) according to claim 1 **characterised in that** the first increasing inclination of the zones in relief (2, 25) is formed by a first distal slope (21) of at least one discharge orifice and a second proximal slope (22) of the at least one discharge orifice, with the second slope being greater than the first slope (21).

3. Cooking plate (1) according to claim 2, **characterised in that** the first slope (21) of the first inclination of a zone in relief (25) extends over at least half of the length of said zone in relief (25).

4. Cooking plate (1) according to one of claims 1 to 3 **characterised in that** the second inclination of the recessed zones (3, 35) is formed a first distal slope (31) of the at least one discharge orifice and a second proximal slope (32) of the at least one discharge orifice, with the second slope being greater than the first slope.

5. Cooking plate (1) according to claim 4, **characterised in that** the first slope (31) of the second inclination of a recessed zone (35) extends over at least half of the length of said recessed zone (35).

6. Cooking plate (1) according to one of the preceding claims **characterised in that** the height (F) of the zones in relief (2, 25), defined with respect to a reference surface (18) of the cooking plate (1), increases as the zones in relief (2, 25) approach the at least one discharge orifice (81).

7. Cooking plate (1) according to one of the preceding claims **characterised in that** the zones in relief (2, 25) are parallel to one another and regularly spaced apart by a determined distance (d).

8. Cooking plate (1) according to claim 8 **characterised in that** the ratio between the determined distance (d) between the zones in relief (2, 25) and the width of each zone in relief (25) is between 1 and 1.5.

9. Cooking plate (1) according to one of the preceding claims **characterised in that** the at least one discharge orifice (81) is made in a channel (8) arranged upstream of the zones in relief and of the recessed zones according to the direct of flow of the juices.

10. Cooking plate (1) according to the preceding claim **characterised in that** the channel (8) has an inclination (K) in the direction of the at least one discharge orifice (81).

11. Cooking grill (G) **characterised in that** it comprises a cooking plate (1) according to one of the preceding claims.

12. Cooking grill (G) according to claim 11 **characterised in that** it comprises at least one lifting stud (61) on the side (10) opposite the at least one discharge orifice (81), with the cooking plate (1) being positioned on said lifting stud (61).

13. Cooking grill (G) according to claim 11 or claim 12, able to be arranged on a flat support (S), **characterised in that** the first inclination of the zones in relief (2, 25) is formed by a first slope (21) of a first angle (A) and a second slope (22) of a second angle (B) with respect to the flat support (S), and the second angle (B) being greater than the first angle (A).

14. Cooking grill (G) according to one of claims 11 to 13, able to be arranged on a flat support (S), **characterised in that** the second inclination of the recessed zones (3, 35) is formed by a first slope (31) of a third angle (A') and a second slope (32) of a fourth angle (B') with respect to the flat support (S), and the fourth angle (B') being greater than the third angle (A').

15. Method for manufacturing a cooking plate according to one of claims 1 to 10, according to which the zones in relief (2, 25) and the recessed zones (3, 35) are manufactured by stamping a plate extending along a determined reference surface (18).
